# EUROPEAN PATENT APPLICATION

(11) **EP 1 333 619 A2**
(43) Date of publication of application: **06.08.2003**
(21) Application number: 02090428.0
(22) Date of filing: 24.12.2002
(51) Int. Cl.: H04L 12/40

(54) **Transmitting and receiving apparatus**

(30) Priority: 27.12.2001 JP 2001396841
(71) Applicant: NEC CORPORATION, Tokyo (JP)
(72) Inventor: Kenichi, Ito, c/o NEC Corporation, Tokyo (JP)
(74) Representative: Patentanwälte Wenzel & Kalkoff

(57) **Abstract**

A transmitting and receiving apparatus can correctly perform transmission and reception of data by quickly determining a signal level of a transmission and reception control signal during a period where a control line of a bus line is not driven. The apparatus includes a master device, slave devices and a bus line connecting the master device and the slave devices. The master device outputs address information identifying the slave device through the bus line. The slave device outputs a reception control signal of the level depending upon capability of data transmission/reception through a control line by driving the control line forming the bus line to the master device. The apparatus also includes level stabilizing signal generating means for outputting a level stabilizing signal to the control line, by driving the control line during a period where the slave device does not drive the control line.

## Description

### BACKGROUND OF THE INVENTION

### Field of the Invention

The invention relates to a transmitting and receiving apparatus. More particularly, the invention relates to a transmitting and receiving apparatus for transmitting and receiving data through a bus line.

### Description of the Related Art

For example, in a WCDMA (Wideband Code Division Multiple Access) radio base station equipment, user data loaded on ATM (Asynchronous Transfer Mode) cells are transmitted and received between an ATM switching portion and each base band processing portion of a MODEM(modulator-demodulator) or the like.

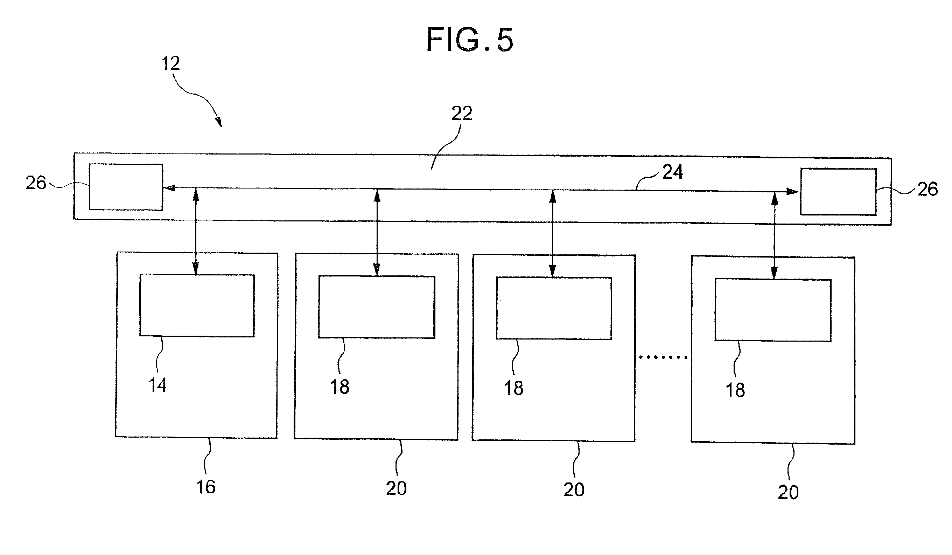

Here, the ATM switching portion is constructed as UTOPIA (Universal Test and Operation PHY (Physical Layer Protocol) Interface for ATM) level 2 master device, for example. The base band processing portion is constructed as UTOPIA level 2 slave device. As shown in Fig. 5, such UTOPIA level 2 master device 14 of radio base station equipment 12 (which will also be referred to as ATM device 14) is mounted on a master (mother) board 16. On the other hand, each UTOPIA level 2 slave device 18 (which will also be referred to as PHY device 18) is mounted on each slave (child) board 20. These boards are connected to a back board 22 in such a manner that ATM device 14 and

PHY device 18 perform transmission and reception of data through a UTOPIA bus line 24 on back board 22.

UTOPIA bus line 24 is constructed with a bus line for transmitting data from ATM device 14 to the PHY devices 18, a bus line for transmitting data from PHY devices 18 to ATM device 14, and control line and so forth. On the other hand, UTOPIA bus line 24 is terminated by terminal circuits 26 having impedance about 50Ω in order to prevent distortion of signal waveform and to lower noise.

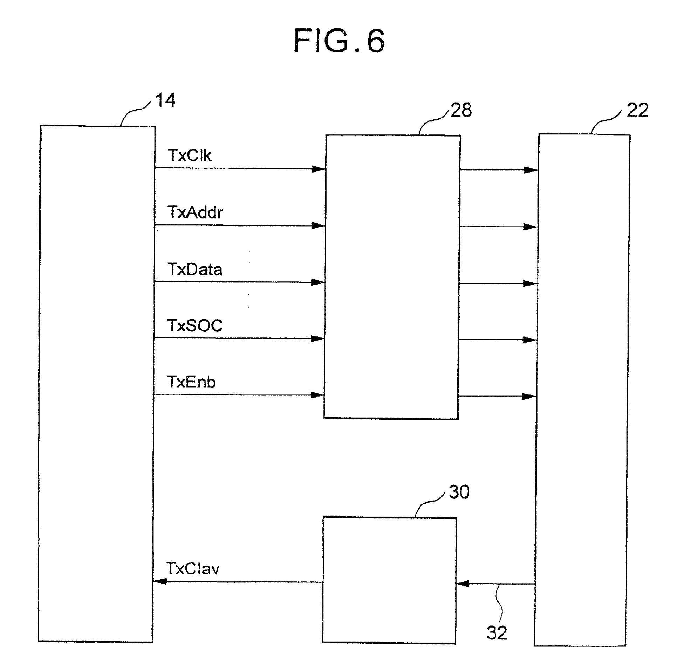

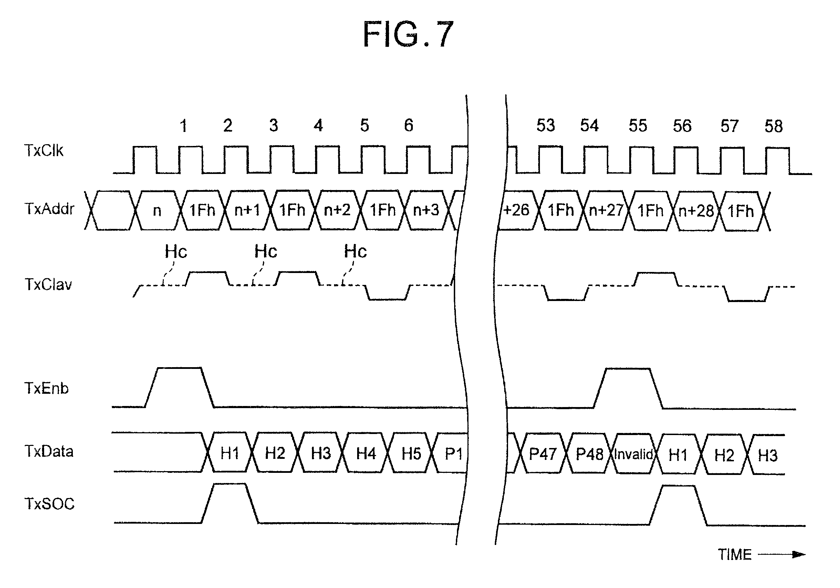

Fig. 6 is a circuit diagram showing an ATM device 14 and a peripheral circuit associating with data transmission from ATM device 14 to PHY devices 18, and Fig. 7 is a timing chart showing operation of the case where data is transmitted from ATM device 14 to PHY devices 18. It should be noted that, in Fig. 6, a circuit associated with data reception in ATM device 14 and a circuit on the PHY device side are eliminated from illustration. On the other hand, like elements to those illustrated in Fig.5 are identified by like numerals.

As shown in Fig. 6, ATM device 14 outputs a clock TxClk, an address data TxAddr, data TxData, a start-of-cell signal TxSOC and an enabling signal TxEnb. These data and signal are fed to corresponding signal line of UTOPIA bus line 24 (in Fig. 5) on back board 22 via a driver circuit 28 for the back board.

When ATM device 14 transmits data to PHY device 18, the latter transmits a cell-available signal TxClav to ATM device 14. The signal TxClav is received by a receiver circuit 30 for back board through UTOPIA bus line 24 and is supplied to ATM device 14.

Next, will be explained the operation when ATM device 14 feeds data to PHY device 18 with reference to Fig. 7.

As shown in Fig. 7, ATM device 14 alternately outputs an address data TxAddr (n, n + 1, n + 2, ...) for identifying

PHY devices 18 and an address data TxAddr (1Fh)having "1" at all bits per each period of the clock TxClk having constant period. In the shown example, address data TxAddr (n, n + 1, n + 2 ...) are output in periods of the even number clocks TxClk, and address data TxAddr (1Fh) are output in periods of odd number clock TxClk.

In contrast to this, each PHY device 18 is responsive to the own address data TxAddr (n, n + 1, n + 2, ...) to output signal TxClav in the period of the next clock TxClk. The signal TxClav is a signal indicative whether the corresponding PHY device 18 can receive data TxData or not. When data can be received, PHY device 18 outputs HIGH level cell-available signal TxClav, and outputs LOW level cell-available signal TxClav otherwise.

Each PHY device 18 has transmission and reception control means (not shown) for outputting cell-available signal TxClav. The transmission and reception control means outputs the foregoing cell-available signal TxClav depending upon whether PHY device 18 can receive data or not. The signal TxClav is supplied to ATM device 14 via receiver circuit 30 for the back board through a predetermined control line 32 (in Fig. 6) forming UTOPIA bus line 24 of back board 22.

On the other hand, the transmission and reception control means has an output portion constructed with a try state buffer circuit. During a period, in which address data TxAddr (n, n + 1, n + 2, ...) is output, namely the period of even number clock TxClk, the impedance of the output portion becomes HIGH to interrupt driving of control line 32. The period when the transmission and reception control means interrupts driving of control line 32 is illustrated by broken line Hc in Fig. 7.

After outputting address data TxAddr (n, n + 1, n + 2, ...), when corresponding PHY device 18 outputs HIGH level cell-available signal TxClav, ATM device 14 transmits data TxData using signal TxSOC and signal TxEnb to PHY device 18, as shown in Fig. 7. The start-of-cell signal TxSOC is a signal indicative of a period, in which data TxData is effective. On the other hand, enabling signal TxEnb is a signal indicative of the position of first data TxData.

ATM device 14 outputs the LOW level start-of-cell signal TxSOC and outputs fifty-three data TxData consisted of five headers H1 to H5 and forty-eight payloads P1 to P48 during the period, in which start-of-cell signal TxSOC is LOW level to a data transmitting bus line in sequential order through driver circuit 28 for the back board. Then, upon outputting the first data TxData, start-of-cell signal TxSOC is set HIGH level to notify the position of the leading end of data to PHY device 18.

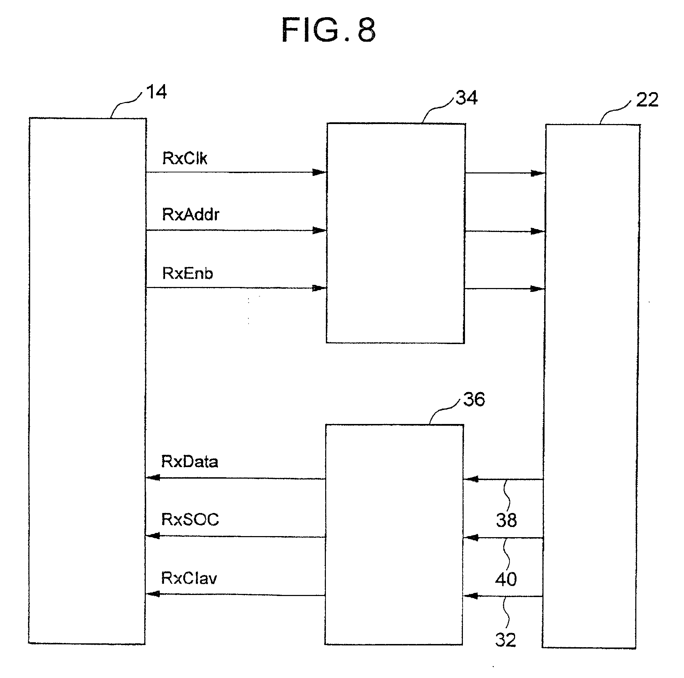

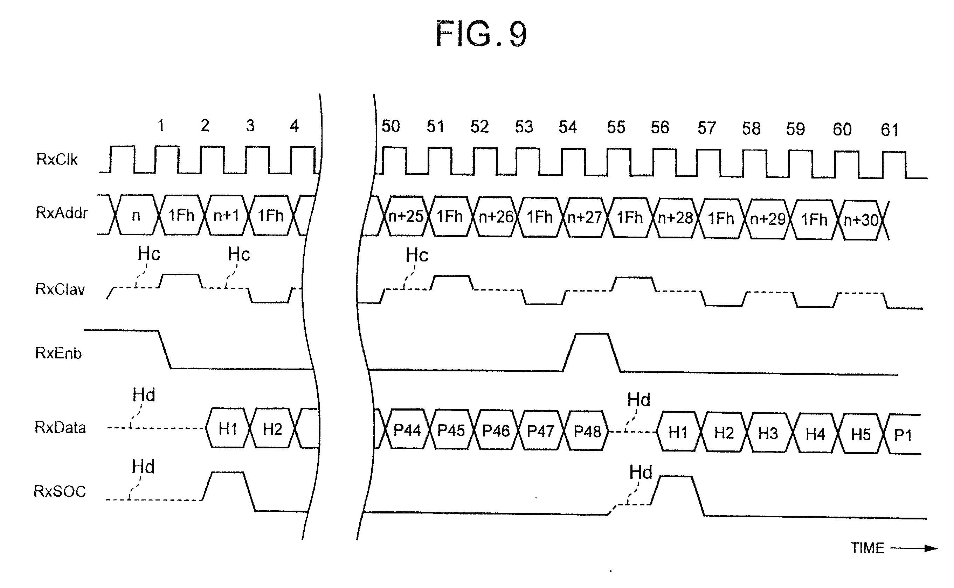

Fig. 8 is a circuit diagram showing ATM device 14 and the peripheral circuit of ATM device 14 associating with data reception from PHY device 18, and Fig. 9 is a timing chart showing operation when ATM device 14 receives data from PHY device 18. It should be noted that circuits associating with data transmission in ATM device 14 and the corresponding circuit on PHY device 18 side are eliminated from illustration in Fig. 18. On the other hand, in Fig. 8, like elements to those in Figs. 5 and 6 are identified by like reference numerals.

As shown in Fig. 8, ATM device 14 outputs a clock RxClk, an address data RxAddr and an enabling signal ExEnb. These data and signal are output to a signal line corresponding to UTOPIA bus line 24 on back board 22 through driver circuit 34 for the back board.

When ATM device 14 receives data from PHY device 18, the latter transmits a data RxData, a start-of-cell signal RxSOC and a cell available signal RxClav. These data and signals are received by a receiver circuit 36 for the back board from PHY device 18 through UTOPIA bus line 24 and are supplied to ATM device 14.

Next, discussion will be given for operation when ATM device 14 receives data from PHY device 18 with reference to Fig. 9. ATM device 14 alternately outputs an address data RxAddr (n, n + 1, n + 2, ...) for identifying PHY devices 18 and an address data RxAddr (1Fh)having "1" at all bits per each period of the clock RxClk having constant period. The address data RxAddr (n, n + 1, n + 2 ...) are output in periods of even number clocks RxClk, and address data RxAddr (1Fh) are output in periodes of odd number clock RxClk.

In contrast to this, each PHY device 18 is responsive to the own address data RxAddr (n, n + 1, n + 2, ...) to output cell-available signal RxClav in the period of next clock RxClk. The cell-available signal RxClav is a signal indicative whether the corresponding PHY device 18 can receive data RxData or not. If so, PHY device 18 outputs HIGH level cell-available signal RxClav, and outputs LOW level cell-available signal RxClav otherwise .

The transmission and reception control means of each PHY device 18 outputs the foregoing cell-available signal RxClav depending upon whether PHY device 18 can receive data or not. The cell-available signal RxClav is supplied to ATM device 14 via receiver circuit 36 for the back board through a predetermined control line 32 forming UTOPIA bus line 24 of back board 22.

On the other hand, during a period, in which address data RxAddr (n, n + 1, n + 2, ...) is output, namely the period of even number clock RxClk, the transmission and reception control means makes the impedance of the output portion HIGH to interrupt driving of control line 32. The period where the transmission and reception control means interrupts driving of control line 32 is illustrated by broken line Hc in Fig. 9.

After outputting address data RxAddr (n, n + 1, n + 2, ...), when corresponding PHY device 18 outputs the HIGH level cell-available signal RxClav, ATM device 14 receives data RxData from PHY device 18 using start-of-cell signal RxSOC and enabling signal RxEnb .

The enabling signal RxEnb is a signal indicative that data RxData can be received. On the other hand, the start-of-cell signal RxSOC is a signal indicative of a position of first data RxData.

ATM device 14 sets enabling signal RxEnb at LOW level for notifying that data can be received, to PHY device 18. In response to this, PHY device 18 outputs fifty-three data RxData consisted of five headers H1 to H5 and forty-eight payloads P1 to P48 to a data reception bus line of the UTOPIA bus line (in Fig. 5). Then, upon outputting the first data RxData, PHY device 18 outputs HIGH level start-of-cell signal RxSOC.

It should be noted that each PHY device 18 makes the impedance of the output of the driver circuit (not shown) of the data receiving bus line 38 HIGH during a period not outputting the data RxData (broken line Hd in Fig. 9) and makes the impedance of the output of the driver circuit (not shown) of the control line for the start-of-cell signal RxSOC, in order to commonly use bus line 38 for data reception and control line 40 for the start-of-cell signal RxSOC.

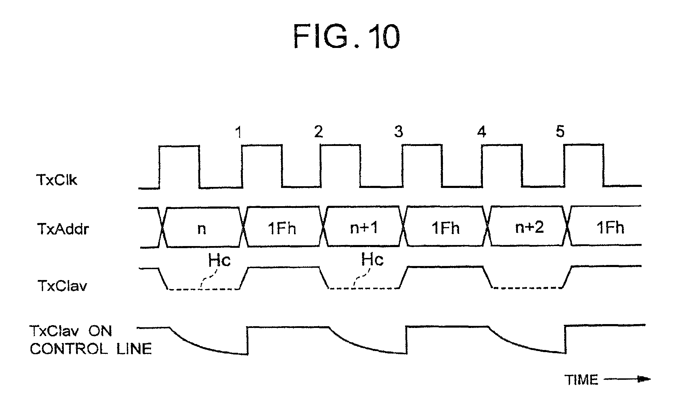

Fig. 10 is a waveform chart showing a cell available signal TxClav in control line 32 of UTOPIA bus line 24 (in Fig. 5). As set forth above, for example, when ATM device 14 transmits address data TxAddr in the period of even number clock TxClk to PHY device 18, the transmission and reception control means of PHY device 18 drives control line 32 of UTOPIA bus line 24 in the period of subsequent odd number clock TxClk to output cell available signal TxClav variable of level depending whether data can be received or not, to control line 32. Then, the transmission and reception control means makes the impedance of its output HIGH during the period of even number clock TxClk so as not to drive control line 32 of UTOPIA bus line 24.

Accordingly, during the period of the odd number clock TxClk, a parasitic capacity relating to control line 32 is charged by the transmission and reception control means. During the period of even number clock Tx clk, the charge accumulated in the parasitic capacity is gradually discharged through terminal circuit 26 of UTOPIA bus line 24. As a result, a waveform of the cell available signal TxClav on control line 32 of UTOPIA bus line 24 is gradually lowered with moderate gradient during the period of the even number clock, when the cell-available signal TxClav is HIGH level during the period of odd number clock TxClk.

When cell-available signal RxClav having the waveform set forth above is incut to receiver circuit 30 for the back board, receiver circuit 30 may cause malfunction due to difficulty in accurate judgment of the level of the cell available signal RxClav to result in difficulty in performing normal data transmission from ATM device 14 to PHY device 18. When ATM device 14 receives the data from PHY device 18, similar problems are met since the waveform of cell available signal Rx Clav is varied with moderate gradient during the period of even number clock RcClk.

### SUMMARY OF THE INVENTION

The invention has been worked out in view of the drawbacks set forth above. It is therefore an object of the invention to provide a transmitting and receiving apparatus which can correctly perform transmission and reception of data by quickly determining a signal level of a transmission and reception control signal during a period when a control line of a bus line is not driven.

According to the first aspect of the invention, a transmitting and receiving apparatus comprises:
a master device transmitting data;
a plurality of slave devices receiving data from the master device; and
a bus line connecting the master device and the slave devices,
the master device outputting address information identifying the slave device to the slave devices through the bus line, the slave device corresponding to the address information outputting a reception control signal of the level depending upon capability of data reception through a control line by driving the control line forming the bus line to the master device,
level stabilizing signal generating means for outputting a level stabilizing signal to the control line, by driving the control line during a period where the slave device does not drive the control line.

According to the second aspect of the invention, a transmitting and receiving apparatus comprising:
a master device receiving data;
a plurality of slave devices transmitting data to the master device; and
a bus line connecting the master device and the slave devices,
the master device outputting address information identifying the slave device to the slave devices through the bus line, the slave device corresponding to the address information outputting a transmission control signal of the level depending upon capability of data transmission through a control line by driving the control line forming the bus line to the master device,
level stabilizing signal generating means for outputting a level stabilizing signal to the control line, by driving the control line during a period where the slave device does not drive the control line.

Preferably, the level stabilizing signal may be a signal sufficient for instantly discharging a charge accumulated in a parasitic capacity of the control line. The master device sequentially may output the address information of respective slave devices in synchronism of a clock signal, and the slave devices may output the transmission and/or reception control signal by driving the control line for a given period in synchronism with the clock signal. The level stabilizing signal generating means outputs the level stabilizing signal in synchronism with the clock signal. The level stabilizing signal generating means may output the level stabilizing signal immediately after termination of driving of the control line by the slave device. The bus line may be terminated by a termination circuit.

In the transmitting and receiving apparatus constructed as set forth above, the level stabilizing signal generating means outputs the level stabilizing signal to the control line by driving the control line during the period where the slave device does not drive the control line. By this, the control line is driven by the slave device, the charge accumulated in the parasitic capacity relating to the control line can be instantly and quickly discharged. After terminating driving of the control line by the slave device, the problem in that the signal waveform of the control line is gradually varied with moderate gradient, can be successfully solved. Therefore, it becomes possible to perform infallibly level judgment of the transmission and reception control signal to permit to constantly assure data transmission between the master device and the slave device.

### BRIEF DESCRIPTION OF THE DRAWINGS

The invention will be understood even better from the detailed description given hereinafter and from the accompanying drawings of the preferred embodiments which, however, should not be taken to be limitative but are for explanation and understanding, only.

In the drawings:
Fig. 1 is a circuit diagram showing one embodiment of a transmitting and receiving apparatus according to the invention, particularly showing an ATM device and a peripheral circuit associated with data transmission from the ATM device to a PHY device;
Fig. 2 is a timing chart showing operation when data is transmitted from the ATM device to the PHY device;
Fig. 3 is a circuit diagram showing second embodiment of a transmitting and receiving apparatus , particularly showing an ATM device and a peripheral circuit associated with reception of data from the PHY device by the ATM device;
Fig. 4 is a timing chart showing operation when the ATM device receives data from the PHY device;
Fig. 5 is a schematic block diagram showing a radio base station equipment;
Fig. 6 is a circuit diagram showing the ATM device and a peripheral circuit associated with data transmission from the ATM device to the PHY device;
Fig. 7 is a timing chart showing operation when data is transmitted from the ATM device to the PHY device;
Fig. 8 is a circuit diagram showing the ATM device and a peripheral circuit associated with reception of data from the PHY device by the ATM device;
Fig. 9 is a timing chart showing operation when the ATM device receives data from the PHY device; and
Fig. 10 is a waveform chart showing a cell available signal TxClav on a control line of a UTOPIA bus line.

### DESCRIPTION OF THE PREFERRED EMBODIMENT

The invention will be discussed hereinafter in detail in terms of the preferred embodiments with reference to the accompanying drawings. In the following description, numerous specific details are set forth in order to provide a thorough understanding of the invention. It will be obvious, however, to those skilled in the art that the invention may be practiced without these specific details.

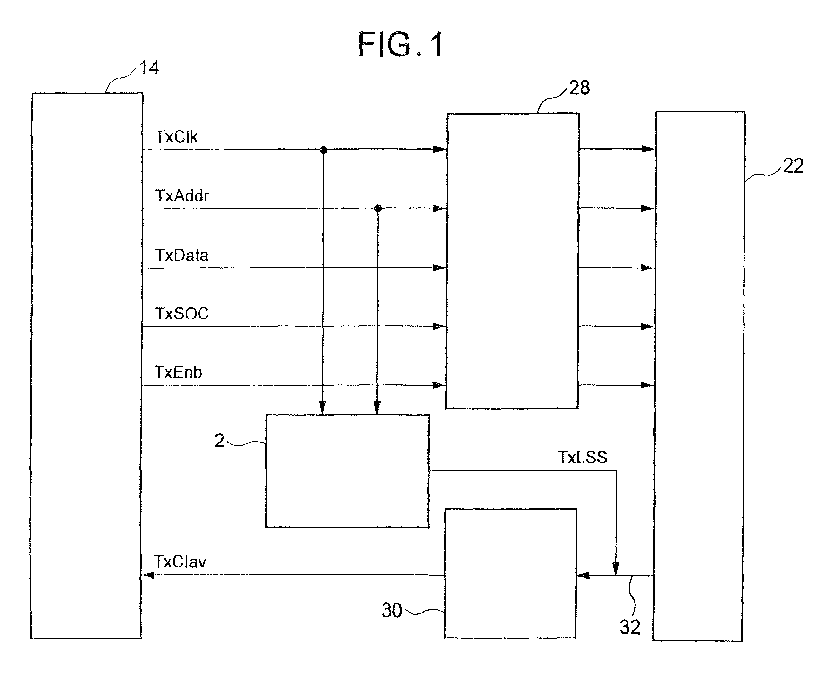

It should be noted that Fig. 1 corresponds to Fig. 6 and like components corresponding those in Fig. 6 will be identified by like reference numerals, detailed description of which may be eliminated for avoiding redundant disclosure.

A circuit shown in Fig. 1 is differentiated from the circuit shown in Fig. 6 in that a level stabilizing signal generating circuit 2 is added. This circuit 2 outputs a level stabilizing signal to control line 32 with driving the latter during the period when PHY device 18 shown in Fig. 5 (slave device relating to the present invention) does not drive control line 32. An output portion of circuit 2 is constructed with the try state buffer circuit (not shown) . An output of the buffer circuit becomes high impedance state when the buffer circuit does not drive the control line 32 is not driven.

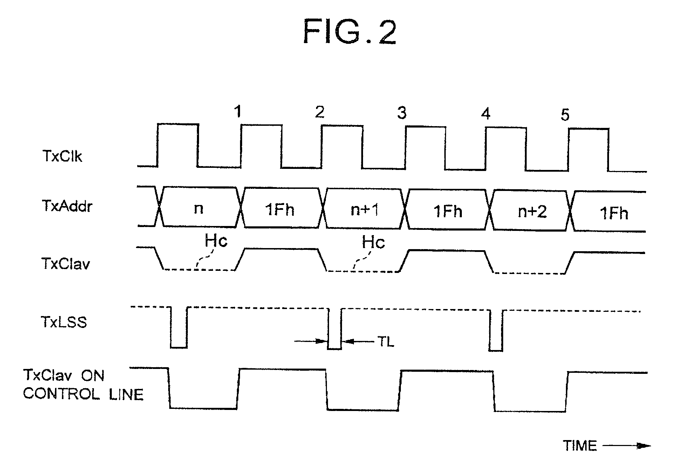

Hereinafter, discussion will be given for operation for stabilizing a signal level of control line 32 by circuit 2 with reference to Fig. 2 in addition to Fig. 1.

A basic operation relating to transmission of data from ATM device 14 (master device in the invention) to PHY device 18 is similar to Fig. 6. Namely, as shown in Fig. 2, ATM device 14 alternately outputs an address data TxAddr (n, n + 1, n + 2, ...) for identifying PHY devices 18 and an address data TxAddr (1Fh)having "1" at all bits per each period of the clock TxClk having constant period. Address data TxAddr (n, n + 1, n + 2 ...) is output in the even number clock TxClk, and address data TxAddr (1Fh) is output in the odd number clock TxClk.

In contrast to this, each PHY device 18 is responsive to the own address data TxAddr (n, n + 1, n + 2, ...) to output cell-available signal TxClav in the period of next clock TxClkby the transmission and reception control means (not shown). The cell-available signal TxClav is a signal indicative whether corresponding PHY device 18 can receive data TxData or not.

If so, PHY device 18 outputs HIGH level cell-available signal TxClav, and outputs LOW level cell-available signal TxClav otherwise. The cell available signal TxClav is supplied to ATM device 14 via receiver circuit 30 for the back board through a control line 32 forming UTOPIA bus line 24.

The transmission and reception control means operates in such a manner that during a period, in which address data TxAddr (n, n + 1, n + 2, ...) is output, namely the period of the even number clock TxClk, the impedance of the output portion becomes HIGH to interrupt driving of control line 32. The period where the transmission and reception control means interrupts driving of control line 32 is illustrated by broken line Hc in Fig. 2.

After outputting address data TxAddr (n, n + 1, n - 2, ...), when the corresponding PHY device 18 outputs the HIGH level cell-available signal TxClav, ATM device 14 transmits data TxData using start-of-cell signal TxSOC and enabling signal TxEnb (Fig. 7).

Then, in the shown embodiment, circuit 2 outputs a level stabilizing signal TxLSS heving a LOW level to control line 32 by driving the latter for a period TL (in Fig. 2) sufficiently shorter than the period of clock TxClk in synchronism with rising edge of clock TxClk immediately after ending of the period in which ATM device 14 outputs address data TxAddr (1Fh). The circuit 2 does not drive control line 32 by setting the output thereof at HIGH impedance during periods other than period TL. The period in which output of circuit 2 is at HIGH impedance is shown by broken line in the level stabilizing signal TxLSS of Fig. 2.

As set forth above, as a result of outputting of the level stabilizing signal of LOW level by circuit 2 to control line 32 by driving control line 32 during period TL, the charge accumulated in the parasitic capacity associating with control line 32 as driven by the transmission and reception control means of PHY device 18 during the period of odd number clock TxClk is quickly discharged substantially at a moment during period TL. Therefore, cell available signal TxClav on control line 32 immediately goes to LOW level.

Therefore, in the shown embodiment, during the period when control line 32 is not driven by PHY device 18, the signal waveform of control line 32 never gradually varies with moderate gradient. Therefore, receiver circuit 30 for the back board can make level judgment of cell available signal TxClav without causing error to constantly assure data transmission between ATM device 14 and PHY device 18.

Next, explanation of the second embodiment of the transmitting and receiving apparatus according to the invention, follows.

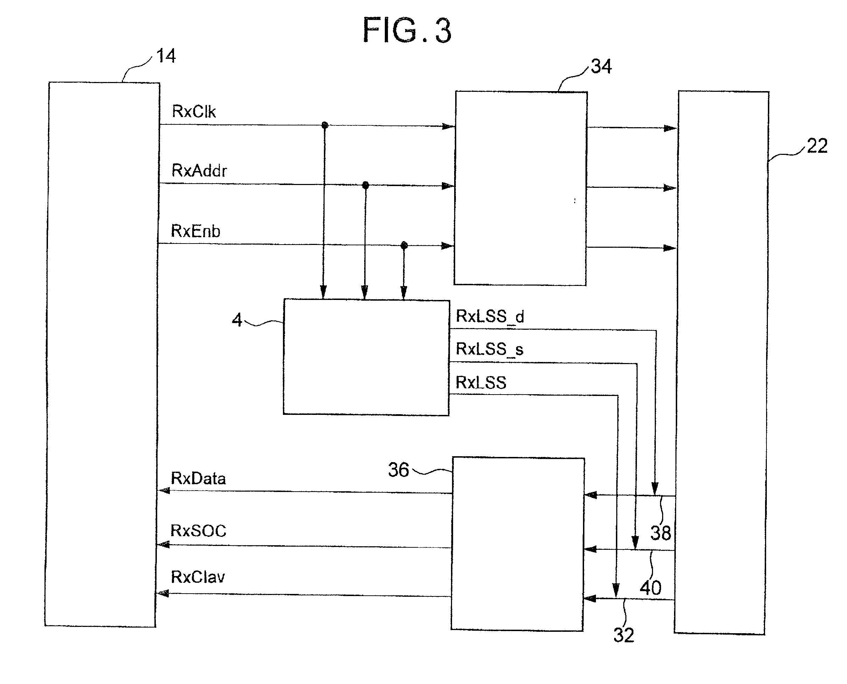

It should be noted that Fig. 3 corresponds to Fig. 8 and like components will be identified by like reference numerals, detailed description of which may be eliminated for keeping disclosure simple enough to facilitate clear understanding of the invention.

A circuit shown in Fig. 3 is different from that shown in Fig. 8 in that a level stabilizing signal generating circuit 4 is added.
Circuit 4 outputs a level stabilizing signal to control line 32 with driving control line 32 during the period when PHY device 18 shown in Fig. 5 (slave device relating to the present invention) does not drive control line 32. An output portion of circuit 4 is constructed with the try state buffer circuit (not shown). An output of the buffer circuit assumes high impedance state when the buffer circuit does not drive control line 32.

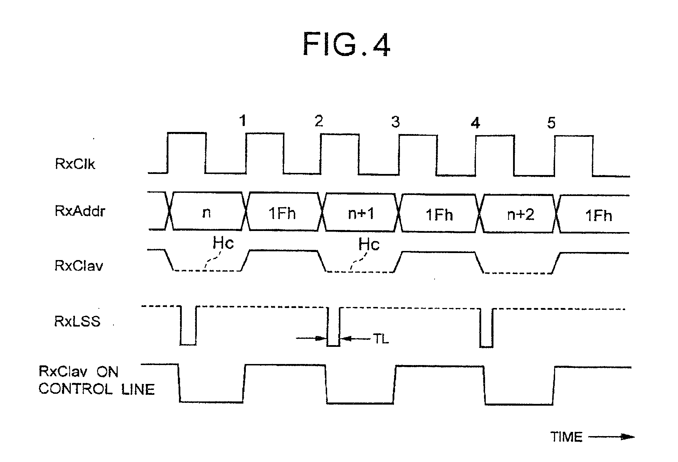

Hereinafter, discussion will be given for operation for stabilizing a signal level of control line 32 by level stabilizing signal generating circuit 4 with reference to Fig. 4 in addition to Fig. 3.
The basic operation relating to transmission of data from ATM device 14 (master device in the invention) to PHY device 18 is similar to the case of Fig. 8. Namely, the ATM device 14 alternately outputs an address data RxAddr (n, n + 1, n + 2, ...) for identifying PHY devices 18 and an address data RxAddr (1Fh)having "1" at all bits per each period of clock RxClk having constant period. In the shown embodiment, address data RxAddr (n, n + 1, n + 2 ...) is output in even number clock RxClk, and address data RxAddr (1Fh) is output in odd number clock RxClk.

In contrast to this, each PHY device 18 is responsive to the own address data RxAddr (n, n + 1, n + 2, ...) to output the cell-available signal RxClav in the period of the next clock RxClk. Signal RxClav is a signal indicative whether the corresponding PHY device 18 hold data RxData to be transmitted or not. When the data to be transmitted is helod, PHY device 18 outputs HIGH level cell-available signal RxClav, and outputs LOW level cell-available signal RxClav otherwise.

Each PHY device 18 has transmission and reception control means (not shown) for outputting cell available signal RxClav. The transmission and reception control means outputs signal RxClav depending upon presence and absence of the transmission data.

Signal RxClav is supplied to ATM device 14 via receiver circuit 36 for the back board through control line 32 forming UTOPIA bus line 24. On the other hand, the transmission and reception control means stops driving of control line 32 with setting its output at HIGH impedance during the period, in which address data RxAddr (n, n + 1, n + 2, ...) is output, namely in the period of even number clock RxClk.

After outputting address data RxAddr (n, n + 1, n + 2, ...), when the corresponding PHY device 18 outputs the HIGH level cell-available signal RxClav, ATM device 14 receives data RxData using enabling signal RxEnb and start-of-cell signal RxSOC from PHY device 18 (in Fig. 9).

Then, level stabilizing signal generating circuit 4 outputs a level stabilizing signal RxLSS having a LOW level to control line 32 by driving control line 32 for a period TL sufficiently shorter than the period of clock RxClk in synchronism with rising edge of clock RxClk immediately after ending of the period in which the ATM device 14 outputs address data RxAddr (1Fh). The circuit 4 does not drive control line 32 by setting the output thereof at HIGH impedance during periods other than period TL. The period when the output of circuit 4 is at HIGH impedance is shown by broken line in the level stabilizing signal RxLSS of Fig. 4.

As a result of outputting signal RxLSS of LOW level by circuit 4 to control line 32 by driving control line 32 during period TL, the charge accumulated in the parasitic capacity associating with control line 32 as driven by the transmission and reception control means of PHY device 18 during the period of odd number clock RxClk is quickly discharged substantially at a moment during period TL. Therefore, during the period when control line 32 is not driven by PHY device 18, the signal waveform of control line 32 is never gradually ried at moderate gradient. As a result, receiver circuit 36 for the back board can make level j judgment of signal RxClav without causing error to constantly assure data transmission between ATM device 14 and PHY device 18.

On the other hand, circuit 4 drives a respective one of the bus line 38 for data reception and the control line 40 for the start-of-cell signal RxSOC at a timing of starting of the period when PHY device 18 does not output data RxData and signal RxSOC to bus line 38 for data reception, namely the period shown by broken line Hd in Fig. 9, to output level stabilizing signal RxLSS_d and RxLSS_s similar to level stabilizing signal RxLSS to bus line 38 for data reception and control line 40 for start-of-cell signal RxSOC.

Accordingly, at a timing starting the period when bus line 38 for data reception and control line 40 for signal RxSOC are not driven by PHY device 18 (the period shown by the broken line Hd of Fig. 9), the charge accumulated in the parasitic capacity relating to these lines is discharged. Thus, the signal level immediately becomes LOW similarly to the case of control line 32. Therefore, receiver circuit 36 for the back board can perform level judgment without error in relation to data RxData and signal RxSOC.

It should be noted that the level stabilizing signal generating circuit 4 specifies a timing of starting the period when bus line 38 for data reception and so forth are not driven by a timing for varying enabling signal RxEnb from HIGH level to Low level, and thus can output level stabilizing signals Rx-LSS_d and RxLSS_s.

As discussed above, with the transmitting and receiving apparatus according to the invention, the level stabilizing signal generating means outputs the level stabilizing signal to the control line by driving the control line during the period when the slave device does not drive the control line. By this, the charge accumulated in the parasitic capacity relating to the control line during the control line is driven by the slave device, can be quickly discharged. After terminating driving of the control line by the slave device, the problem in that the signal waveform of the control line is gradually varied with moderate gradient, can be successfully solved. Therefore, it becomes possible to perform infallibly level judgment of the transmission and reception control signal to permit to constantly assure data transmission between the master device and the slave device.

Although the invention has been illustrated and described with respect to exemplary embodiments, it should be under stood by those skilled in the art that the foregoing and various other changes, omission and additions may be made therein and thereto, without departing from the spirit and scope of the invention. Therefore, the invention should not be understood as limited to the specific embodiments set out above but to include all possible embodiments which lie within a scope encompassed and equivalent thereof with respect to the features of the appended claims.

## Claims

1. A transmitting and receiving apparatus comprising:
a master device transmitting data;
a plurality of slave devices receiving data from the master device; and
a bus line connecting the master device and the slave devices,
the master device outputting address information identifying the slave device to the slave devices through the bus line, the slave device corresponding to the address information outputting a reception control signal of the level depending upon capability of data reception through a control line by driving the control line forming the bus line to the master device,
level stabilizing signal generating means for outputting a level stabilizing signal to the control line, by driving the control line during a period where the slave device does not drive the control line.

2. A transmitting and receiving apparatus comprising:
a master device receiving data;
a plurality of slave devices transmitting data to the master device; and
a bus line connecting the master device and the slave devices,
the master device outputting address information identifying the slave device to the slave devices through the bus line, the slave device corresponding to the address information outputting a transmission control signal of the level depending upon capability of data transmission through a control line by driving the control line forming the bus line to the master device,
level stabilizing signal generating means for outputting a level stabilizing signal to the control line, by driving the control line during a period where the slave device does not drive the control line.

3. Apparatus as claimed in claim 1 or 2,
wherein the level stabilizing signal is a signal sufficient for instantly discharging a charge accumulated in a parasitic capacity of the control line.

4. Apparatus as claimed in any one of claims 1 to 3,
wherein the master device sequentially outputs the address information of respective slave devices in synchronism of a clock signal, and the slave device outputs the transmission control signal by driving the control line for a given period in synchronism with the clock signal.

5. Apparatus as claimed in any one of claims 1 to 4,
wherein the level stabilizing signal generating means outputs the level stabilizing signal in synchronism with the clock signal.

6. Apparatus as claimed in any one of claims 1 to 5,
wherein the level stabilizing signal generating means outputs the level stabilizing signal immediately after termination of driving of the control line by the slave device.

7. Apparatus as claimed in any one of claims 1 to 6,
wherein the bus line is terminated by a termination circuit.
